Europäisches Patentamt

**European Patent Office**

Office européen des brevets

(19)

(11) Publication number: **0 130 080**
**B1**

(12)

# EUROPEAN PATENT SPECIFICATION

(45) Date of publication of patent specification: **18.05.88**

(51) Int. Cl.⁴: **C 09 J 3/14, C 08 L 33/08**

(21) Application number: **84304322.5**

(22) Date of filing: **26.06.84**

(54) Pressure sensitive adhesive.

(30) Priority: **27.06.83 US 508201**

(43) Date of publication of application:
**02.01.85 Bulletin 85/01**

(45) Publication of the grant of the patent:
**18.05.88 Bulletin 88/20**

(84) Designated Contracting States:
**AT BE CH DE FR GB IT LI LU NL SE**

(56) References cited:
**DE-A-3 140 156**
**US-A-3 345 320**

(73) Proprietor: **Johnson & Johnson Products Inc.**
**501 George Street**
**New Brunswick New Jersey 08903 (US)**

(72) Inventor: **Haddock, Teresa Huang**
**30 Sheffield Road**
**East Windsor NJ 08520 (US)**

(74) Representative: **Jones, Alan John et al**
**CARPMAELS & RANSFORD 43 Bloomsbury Square**
**London, WC1A 2RA (GB)**

Courier Press, Leamington Spa, England.

EP 0 130 080 B1

# 0 130 080

## Description

This invention relates to emulsion-type, pressure-sensitive adhesives, and more particularly, to pressure-sensitive adhesives for medical products having a high level of adhesion to human skin even under hot and humid conditions.

Although many adhesive compositions are known, very few of these are completely satisfactory for application to human skin. The requirements for such adhesives are stringent; it must adhere well to human skin during perspiration when the weather is hot, yet be removable without leaving adhesive residue on the skin's surface. Numerous homopolymers, copolymers, and terpolymers, have been proposed for use as polymeric adhesives. The demands of modern technology, however, are for even higher requirements of adhesion and cohesion. Adhesion should take effect immediately on application to skin, even in a hot and humid environment, and should release cleanly when voluntarily removed in this environment.

Many acrylate homopolymers, copolymers and terpolymers previously used as surgical adhesives lose adhesion in a moist environment. In the prior art, acrylic esters have been copolymerized with small portions of monomers such as acrylic acid, methacrylic acid, itaconic acid, acrylamide, methacrylamide, acrylic esters, vinyl esters, n-alkoxyalkyl unsaturated carboxylic acid amides, half esters, half amides, amide esters, amides and imides of maleic anhydride, and the alkylaminoalkylene monoesters of maleic, itaconic or citraconic acids. Such is disclosed, for example, in U.S. Patents Nos. 1,760,820; 3,189,581; 3,371,071; 3,509,111 and 3,475,363. Although the use of these compositions results in adhesives which adhere well to dry skin, many of these compositions lose adhesiveness in a hot/humid environment. Another drawback of many prior art adhesives is that during removal from skin there is transfer of adhesive from the tape to the skin. This adhesive transfer is highly undesirable in a surgical adhesive tape.

Notwithstanding the utility and commercial success of acrylic pressure-sensitive adhesives, there are numerous applications of surgical tapes requiring such outstanding adhesive performance in a hot and moist environment that presently available pressure-sensitive adhesives have not been entirely satisfactory. Thus, there is need for pressure-sensitive adhesives having improved adhesion to skin for surgical tapes, dressings, drapes, adhesive bandages, and the like.

Heretofore, adhesive polymers used for surgical adhesive tapes often exhibited a dynamic modulus too low for outstanding wear performance. A low storage modulus and a low loss modulus result in a soft adhesive exhibiting low cohesive strength and high adhesive transfer to skin on voluntary removal. Previously, cohesive strength had been imparted to pressure-sensitive adhesives by making high molecular weight polymers or polymers containing carboxyl groups. Methods such as these, however, have generally prove less than satisfactory since cohesive strength was attained only at the expense of adhesive strength.

For many years, pressure-sensitive adhesive compositions have predominately been limited to organic solvent-based adhesives. These compositions exhibit excellent adhesive properties, as for example, strength, tack and cohesive strength, but, nevertheless, also possess several disadvantages. The main disadvantages of the solvent-based adhesives include fire and explosion hazards which necessitate the use of special ventilating and explosion proof equipment. In large scale uses of solvent-based adhesives, the removal of organic solvent during drying requires special solvent recovery equipment to avoid problems of air pollution. Most pressure-sensitive adhesives are coated from solvent solutions. Solvent emissions restrictions, increasing energy costs, the potential decreased availability of energy, rising solvent prices, and more stringent health and safety regulations make the need for safer, less energy-intensive alternates urgent.

It is accordingly an object of the present invention to provide an improved surgical pressure-sensitive adhesive. It is a further object of the invention to provide a pressure-sensitive adhesive having improved wear performance, particularly having good adhesion to skin under hot and humid conditions where skin perspiration affects adhesion. It is a yet further object of the invention to provide a water-based, pressure-sensitive adhesive having performance levels comparable to solvent-based adhesives. The invention further provides an economical process for making the adhesive composition through aqueous emulsion polymerization and a method for coating the adhesive onto a substrate.

Accordingly, the present invention provides a pressure-sensitive adhesive, suitable for use on human skin, having:

a dynamic storage modulus of 1.0 to 2.0 N/cm$^2$;

a dynamic loss modulus of 0.6 to 0.9 N/cm$^2$;

a modulus ratio, tan $\delta$(=loss modulus/storage modulus), of from 0.4 to 0.6 as determined at an oscillation frequency sweep of 1 rad/sec at 25% strain rate at body temperature of 36°C,

and comprising a copolymer of either:

(a) 90—95% n-butylacrylate and 5—10% n-vinylcaprolactam; or

(b) 80—90% 2-ethylhexylacrylate and 10—20% n-vinyl caprolactam, which copolymer was formed by emulsion polymerisation in water.

Other functional polar monomers may be incorporated into the copolymer at concentrations less than that of the N-vinylcaprolactam.

The Tg of the copolymer adhesive composition should be less than −25°C.

2

Preferably, the copolymer further comprises 0.01 to 5% of a carboxyl- or hydroxyl-containing comonomer.

Preferably the carboxyl- or hydroxyl-containing comonomer is acrylic acid, methacrylic acid, N-methylolacrylamide, N-(isobutoxy)methacrylamide, N-(n-butoxy)methacrylamide, 2-hydroxyethylacrylate, or 2-hydroxypropylacrylate.

The present invention also provides a pressure-sensitive adhesive sheet product for medical applications comprising a cloth, fabric, paper or plastic film backing material coated with an adhesive according to the invention.

The adhesive composition is prepared by a process of emulsion polymerization wherein the monomers are emulsified in water and polymerized in the presence of a water-soluble polymerization initiator. For adhesive coating applications, the emulsion typically has a solids content of at least 50 percent, and a viscosity within the range of from about 600 to 2000 cps (0,6 to 2 Pa · s). Viscosity is controlled through control of emulsion particle size or by post-thickening with a water-soluble polymer.

The polymer emulsion is coated on a selected backing material and dried at 93° to 204°C (200° to 400°F). The adhesive-coated material provides good initial adhesion to dry or moist skin and retains a high level of adhesion in a hot and humid environment. When voluntarily removed from the skin, negligible adhesive residue remains on the skin surface.

The amount of water used in the emulsion polymerisation is preferably 1 to 3 times the total weight of the monomers, and an emulsifier may be a commercial product such as Aerosol MA, a sodium dihexyl sulfosuccinate, or Aerosol 501, a mixture of disodium ethoxylated half esters of sulfosuccinic acid, sold by American Cyanamid Company. Many emulsifiers are commercially available for emulsion polymerization and may be classified as anionic, cationic or nonionic. Generally, anionic emulsifiers are preferred for the present invention, although for the monomers described above, nonionic emulsifiers are also effective. The common anionic surfactants are alkyl or alkyl ether sulfate such as sodium lauryl sulfate, sodium lauryl ether sulfate, alkyl aryl sulfonates such as sodium dodecyl benzene sulfonate and alkyl sulfosuccinates such as sodium dihexyl sulfosuccinate. Nonionic surfactants are mainly alkyl or alkylaryl and thioethers with 10 to 40 moles of ethylene oxide units, or an ethoxylated nonyl phenol half ester of sulfosuccinic acid. With a proper choice of surfactants, an adhesive emulsion of desired viscosity can be obtained. The amount of surfactants may vary from 1 percent to 5 percent based on 100 parts of monomers, while the preferred level is 2 percent to 3 percent.

The polymerization initiator may be a water-soluble composition initiator such as sodium persulfate, potassium persulfate or ammonium persulfate. A reducing agent such as sodium thiosulfate or sodium meta bisulfite may also be used. In general, the amount of the initiator used in the preferred aqueous emulsion polymerization systems may vary from about 0.1 to about 1 part per 100 parts of total monomers.

An inherent advantage of the emulsion polymerization method is that crosslinking can be built into the polymer at the time of polymerization. A number of difunctional crosslinking monomers may be used, such as 1,6-hexanediol diacrylate, ethylene glycol diacrylate, butanediol dimethacrylate, N-methylol acrylamide and triethylene glycol dimethacrylate. A chain transfer agent, such as N-dodecyl mercaptan or 2-mercapto ethanol may be incorporated into the polymerization in order to optimize the modulus. The level of molecular weight regulator may be varied from 0.01 to 1 percent by weight of monomer.

For surgical pressure-sensitive adhesive sheet products, the adhesive emulsion is coated onto an appropriate backing substrate which may be a porous or nonporous material. Representative porous materials include paper and woven and nonwoven fabrics which may be composed of wood pulp, rayon, polyester, acetate fibers, cotton fibers and blend combinations such as wood pulp and rayon, and wood pulp and polyester. Nonporous backings can be films of polyvinyl chloride, polyethylene, polypropylene and the like.

Surgical pressure-sensitive adhesive sheet products, as the term is herein used, include any product having a flexible backing and a pressure-sensitive adhesive coating thereon including, although not limited to, such products as adhesive tapes, adhesive bandages, adhesive plasters, adhesive-coated surgical operating sheets, adhesive coated corn pads, adhesive-coated absorbent dressings, and the like. The pressure-sensitive adhesive of the present invention is particularly suitable for surgical adhesive tapes. A standard reverse-roll coater may be used directly to coat the emulsion adhesive onto the backing material, or the emulsion adhesive may be coated on release paper for transfer to the backing. The adhesive coating weight may vary from 34 to 68 g/m² (1 to 2 oz/yd²) depending on the application.

The solids content of the adhesive emulsion is preferably at least 50 percent by weight, and the viscosity is preferably in the range of 600 to 2000 cps (0,6 to 2 Pa · s), and most preferably greater than 1000 cps (1 Pa · s) for application to porous backing materials. Too low emulsion viscosity can cause adhesive strike-through when the emulsion is directly coated onto the backing on a reverse-roll coater. The emulsion viscosity can be controlled by either controlling the emulsion particle size or by post-thickening with a water-soluble polymer such as the carboxylated acrylic thickener ASE-60 from Rohm & Haas, a polyvinyl alcohol, or a cellulose type thickner. Controlling the emulsion particle size is a preferred method to control emulsion viscosity.

After coating, the backing material and adhesive emulsion are passed through a drying zone preferably controlled at 93° to 204°C (200°—400°F) where the water is removed leaving the adhesive polymer deposited on the substrate. The adhesive is a viscoelastic material characterized by a dynamic shear modulus of from about 1.0 to 2.0 N/cm², a dynamic loss modulus of from about 0.6 to 0.9 N/cm², and a modulus ratio tan δ of from about 0.4 to 0.6, as determined at an oscillation frequency sweep of 1.0 rad/sec at 25 percent strain rate and 36°C. Adhesives with moduli higher than the acceptable range have poor adhesive strength, while adhesives with moduli below the acceptable range exhibit poor cohesive strength and transfer large amounts of adhesive to the skin on removal.

The invention will be described in greater detail by the following examples in which all parts are by weight. As a quantitative aid to evaluating products of the present invention, it has been found helpful to employ certain empirical tests, which will now be described in more detail.

Williams plasticity number

This property which indicates the deformability of the adhesive mass under static load is measured using a Williams Plastometer, manufactured by Scott Testers, Inc., following the procedures of ASTM Method D-926.

Wear performance test

Adhesion to Skin, 24-Hour Arm Test, 24 Subjects. Six to eight 2.5×7.5 cm (1×3 inch) strips of adhesive tape are applied to the upper right and left arms, and subjects allowed to engage in normal activities and bathing habits. At the end of 24 hours, adhesion readings are taken. Skin redness, degree of skin strippage and adhesive left on the skin are noted and recorded. Adhesion is rated from 0 (tape off) to 7 (perfect adhesion). Adhesive transfer is rated from 0 (no residue) to 10 (heavy residue).

Test results are reported as the average for all test subjects.

Modulus measurement

The Rheometrics Dynamic Spectrometer (RDS) manufactured by Rheometrics, Inc. in Union, New Jersey, is used to determine adhesive viscoelastic behavior in terms of storage modulus and loss modulus. All modulus values reporated in the following examples are in N/cm².

Example 1 (95 BA/5 NVCL)

A 5-liter, 4-neck, round-bottom flask was fitted with Teflon blade stirrer, a water condenser, a thermometer, a nitrogen inlet tube, and two graduated addition funnels. One funnel had a capacity of at least 500 ml, and the other at least 200 ml. The following ingredients were added to the flask:

| | |
|---|---|
| Water | 1600 g |
| Aerosol MA | 30 |
| Aerosol 501 | 60 |
| Sodium bicarbonate | 10 |
| Butyl acrylate (BA) | 190 |
| N-vinyl caprolactam (NVCL) | 10 |

When all the ingredients were in the flask, a slow nitrogen flow was started under the surface of the liquid. Nitrogen flow was continued throughout the polymerization. Stirring was started and adjusted to 200 rpm and maintained throughout the polymerization. The flask was immersed in a hot water bath and heated to 70°C. Two grams of ammonium persulfate in 20 g water were added to the flask. Initiation of the polymerization was observed and polymerization was continued for one-half hour. At the end of one-half hour, simultaneously monomer slow addition and surfactant/catalyst slow addition were uniformly added over a period of three hours. The two slow additions were as follows:

Monomer slow addition:

| | |
|---|---|
| Butyl acrylate | 1710 g |
| N-vinyl caprolactam | 90 |

Surfactant/catalyst slow addition:

| | |
|---|---|
| Water | 300 g |
| Aerosol 501 | 60 |
| Ammonium persulfate | 10 |

After the slow additions were completed, polymerization was continued for an additional one-half hour. The polymerization product was cooled and filtered through cheese-cloth. A small amount of coagulum (<0.5 percent) was obtained.

The emulsion had a Brookfield viscosity of 1180 cps (1.18 Pa · s) (30 rpm, 25°C), a solids content of 51 percent and pH of 6.9. The adhesive polymer had a Williams plasticity number of 1.9 mm. The dynamic

4

shear moduli as determined on the Rheometric Dynamic Spectrometer (RDS) at 36°C, 25 percent strain were as follows:

storage modulus—1.4

loss modulus—0.7

tan δ—0.51

The emulsion adhesive was coated onto a rayon taffeta cloth backing on a standard reverse-roll coater to approximately 0.1 mm (4 mils) wet thickness, and passed through a 4-zone temperature oven at 93°, 121°, 149° and 177°C (200°, 250°, 300°, and 350°F) in sequence. There was not adhesive penetration through the backing. The coated backing was slit and wound into 2.5 cm (1 inch) wide rolls of tape. The tape unwound readily, aged well and exhibited excellent tack. Wear performance tests in hot/humid weather showed that long-term skin adhesion was excellent and that the tape was removed from the skin with very low adhesive transfer. The performance of the adhesive of this example was superior to commercial surgical cloth tape, Covinax 472 emulsion adhesive sold by Franklin Chemical Industries and Emulsion Adhesive 2074 sold by Monsanto Company, as illustrated by the data in Table I.

Example 2 (93 BA/7 NVCL)

The procedure was the same as Example 1, except the monomer composition was 93 percent butyl acrylate and 7 percent N-vinyl caprolactam. The emulsion had a solids content of 51.2 percent, pH of 6.9 and Brookfield viscosity of 1060 cps (1,06 Pa · s). The adhesive polymer had a Williams plasticity number of 2.2 mm, a storage modulus of 1.7, a loss modulus of 0.82, and a tan δ of 0.48. The emulsion was coated on rayon cloth backing to form adhesive tape as described in Example 1. Wear performance test data showed that the tape gave high adhesion and low adhesive transfer to skin as illustrated by the data in Table II.

Example 3 (95 BA/5 NVCL/0.05 NMA)

The procedure was the same as Example 1 except in the initial charge to the flask, 0,1 g of N-methylol acrylamide (0.05% on 100 parts monomer) was added. The emulsion had a solids content of 50.5 percent, pH of 7.1 and Brookfield viscosity of 960 cps (0,96 Pa · s). The Williams plasticity number was 2.2 mm, the storage modulus $1.6 \times 10^5$, the loss modulus 0.82, and tan δ 0.46. The wear performance was excellent in both skin adhesion and adhesive transfer as indicated by the data in Table I. For purposes of comparison, the dynamic shear moduli of the control adhesives were determined to be as follows:

Modulus, $N/cm^2$

|  | Storage | Loss | Tan δ |
|---|---|---|---|
| Covinax 472 | 0.73 | 0.60 | 0.82 |
| Emulsion 2074 | 1.1 | 0.60 | 0.55 |

TABLE I
Wear performance of adhesives on rayon
cloth backing in hot/humid weather

| Example | Adhesive composition | Average adhesion | Average adhesive transfer |
|---|---|---|---|
| 1 | 95BA/5NVCL | 6.4 | 2.5 |
| 3 | 95BA/5NVCL/0.05 NMA | 6.4 | 2.5 |
| Control | Surgical cloth tape | 5.9 | 2.0 |
| Control | Covinax 472 | 6.5 | 4.5 |
| Control | Emulsion adhesive 2074 | 5.6 | 3.0 |

Example 4 (95BA/5 NVCL/0.2 MAA)

The procedure was the same as Example 1, except that 0,4 g (0.2 percent based on 100 pts monomer) of methacrylic acid (MAA) were added in the monomer slow addition mixture. The emulsion adhesive polymer had a composition of 95 BA/5 NVCL/0.2 MAA. The emulsion had a solids content of 51.3 percent, pH of 7.0, and Brookfield viscosity of 1,300 cps (1.3 Pa · s). The Williams plasticity number of the dried adhesive was 2.3 mm, the storage modulus 1.3, the loss modulus 0.66, and tan δ0.5. The emulsion was coated on rayon cloth backing, tape was made and wear performance evaluated. The wear performance results are presented in Table II and are considered to be excellent.

TABLE II

Wear performance of adhesives on rayon cloth backing

| Example | Adhesive composition | Average adhesion | Average adhesive transfer |
|---------|---------------------|------------------|---------------------------|
| 2 | 93BA/7NVCL | 6.5 | 1.5 |
| 4 | 95BA/5NVCL/0.2MAA | 6.3 | 2.5 |
| 9 | 95 2EHA/5AA | 5.4 | 2.5 |
| 10 | 95BA/5AA | 3.4 | 2.0 |
| 11 | 95BA/5NVP | 4.2 | 3.0 |
| 12 | 97BA/3N-IBMA | 5.5 | 2.0 |
| Control | Surgical cloth tape | 6.4 | 2.0 |

Example 5 (95BA/5 NVCL)

The emulsion adhesive of Example 1 was coated according to the procedure of Example 1 onto the paper backing composed of a blend of wood pulp and polyester fiber. Adhesive tapes were made and wear performance evaluated in comparison with two commercial surgical adhesive paper tapes. The adhesive tape of this Example had excellent wear performance with high adhesion to skin and low adhesive transfer as shown in Table III.

TABLE III

Wear performance of adhesives on paper backing

| Example | Adhesive composition | Average adhesion | Average adhesive transfer |
|---------|---------------------|------------------|---------------------------|
| 5 | 95BA/5 NVCL | 6.4 | 2.5 |
| 14 | 55BA/40 2-EHA/5AA | 2.9 | 1.5 |
| Control | Surgical paper tape A | 5.1 | 2.5 |
| Control | Surgical paper tape B | 5.0 | 2.5 |

Example 6 (95 BA/5 NVCL)

The emulsion adhesive of Example 1 was coated on a poly(vinyl chloride) film backing according to the procedure of Example 1. Adhesive bandage strips were made and wear performance evaluated in comparison with a commercial adhesive bandage strip with the results illustrated by the data in Table IV.

TABLE IV

Wear performance of adhesives on vinyl backing

| Example | Adhesive composition | Average adhesion | Average adhesive transfer |
|---------|---------------------|------------------|---------------------------|
| 6 | 95BA/5NVCL | 6.4 | 3.5 |
| Control | Commercial adhesive bandage | 6.4 | 4.0 |

**Example 7 (80 2EHA/20 NVCL)**

The procedure was the same as Example 1 except that a monomer composition of 80 percent 2-EHA/20 percent NVCL was polymerized, using 3 percent Aerosol MA and 2 percent Triton X-100 (Rohm & Haas) as emulsifiers. The emulsion had a solids content of 51.0 percent, pH of 7.4 and Brookfield viscosity of 800 cps (0,8 Pa · s). The Williams plasticity number of the dry adhesive was 2.3 mm, the storage modulus 1.4, the loss modulus 0.9, and tan δ0.6. Adhesive tapes made according to the procedure of Example 1 demonstrated good skin adhesion.

**Example 8 (90 BA/10 NVCL)**

The procedure was the same as Example 1 except that a monomer composition of 90 percent butyl acrylate and 10 percent N-vinyl caprolactam was polymerized. The emulsion had a solids content of 51.1 percent, pH of 6.8 and Brookfield viscosity of 880 cps (0,88 Pa · s). The Williams plasticity number of the dry adhesive was 2.1 mm, the storage modulus 1.4, the loss modulus 0.75, and tan δ0.5. Adhesive tapes made according to the procedure of Example 1 demonstrated good skin adhesion.

The following Examples 9 to 13 were conducted to evaluate similar adhesive compositions prepared by an aqueous emulsion polymerization process. None of these alternative compositions had performance characteristics as good as those of the adhesive compositions of the present invention. Even the substitution of N-vinyl-2-pyrrolidone for N-vinyl caprolactam resulted in a markedly inferior product as illustrated by Example 11.

**Example 9 (95 2-EHA/5AA)**

The procedure of Example 1 was used except that the monomer composition was 95 percent 2-ethylhexyl acrylate and 5 percent acrylic acid. The resulting emulsion had solids content of 51 percent, pH of 4.0 and Brookfield viscosity of 1400 cps (1,4 Pa · s). The dry adhesive had a Williams plasticity number of 1.9 mm, a storage modulus of 1.4, a loss modulus of 0.6, and tan δ0.43. The emulsion was coated on rayon cloth backing and tapes mades. Even though the shear moduli of this adhesive were in the desirable range for the butyl acrylate/N-vinyl caprolactam adhesives of the present invention, the human wear test showed lower skin adhesion and slightly higher adhesive transfer as illustrated by the data in Table II.

**Example 10 (95 BA/5AA)**

The procedure was the same as Example 1, except the emulsion had a monomer composition of 95 percent butyl acrylate and 5 percent acrylic acid (AA). The emulsifiers used were 1 percent Sipex UB (sodium lauryl sulfate, 30 percent active from Alcolac) and 5 percent ABEX JKB (30 percent active, also from Alcolac) in the initial charge. The same amount of surfactants was used in the slow addition. After the polymerization was completed, 12 g of 28 percent NH₄OH were used to neutralize the emulsion to a pH of 7.0. The emulsion had a solids content of 49 percent and a Brookfield viscosity of 1000 cps (1 Pa · s). The dry adhesive had a Williams plasticity number of 2.4 mm, a storage modulus of 2.1, a loss of modulus of 0.9, and tan δ0.44. The emulsion was coated on rayon cloth backing and tapes were made and evaluated. The adhesive had an excellent low score of adhesive transfer, but it exhibited very poor skin adhesion as illustrated by the data in Table II.

**Example 11 (95 BA/5 N-vinyl-2-pyrrolidone)**

The procedure was the same as Example 1 except the monomer composition was 95 percent butyl acrylate and 5 percent N-vinyl-2-pyrrolidone (NVP). The emulsion had a Brookfield viscosity of 600 cps (0,6 Pa · s), pH of 6.9 and solids content of 52 percent. Williams plasticity number of the dry adhesive was 1.6 mm, the storage modulus 1.7, the loss modulus 1.0, and tan δ0.59. Adhesive tape made according to the procedure of Example 1 was low in tack and poor in tape wear performance as illustrated by the data in Table II.

**Example 12 (97 BA/3N-[Isobutoxy methyl acrylamide])**

The procedure was the same as Example 1 except that the monomer composition was 97 percent butyl acrylate and 3 percent N-(isobutoxy methyl acrylamide) (N-IBMA). The emulsion had a solids content of 51 percent, pH of 7.2 and Brookfield viscosity of 1280 (1,28 Pa · s) cps. The Williams plasticity number of the dry adhesive was 2.6 mm, the storage modulus 2.0, the loss modulus 0.85 and tan δ0.43. Adhesive tapes made according to the procedure of Example 1 showed low skin adhesion and acceptable adhesive transfer as illustrated in Table II.

**Example 13 (55 BA/40 2EHA/5AA)**

The procedure of Example 1 was used except that a monomer composition of 45 percent butyl acrylate, 50 percent 2-ethylhexyl acrylate and 5 percent acrylic acid. The polymerization included 5 percent ABEX JKB and 2 percent Triton X-100 (Rohm & Haas) as emulsifiers. The emulsion had a solids content of 51 percent, pH of 8 (after neutralizing with 28 percent NH₄OH) and a Brookfield viscosity of 1800 cps (1,8 Pa · s). The Williams plasticity number of the dry adhesive was 2.2 mm, the storage modulus 2.5, the loss modulus 0.68 and tan δ0.27. The emulsion adhesive was coated according to the procedure of Example 1

7

0 130 080

onto a paper backing of Example 5. The wear performance of the adhesive tape of this example was poor as shown in Table III.

The present invention provides a novel adhesive composition and process for use in producing surgical adhesive sheet products which are substantially free from the disadvantages of surgical adhesive products known in the art. The adhesive polymer according to the present invention is distinguished in particular by the following advantages:

a) Surgical adhesive tapes prepared with the aqueous emulsion adhesive exhibit excellent long-term adhesion under hot and humid conditions and, on voluntary removal, transfer only trace amounts of adhesive to the skin;

b) the aqueous emulsion adhesive can be prepared with optimum viscosity and surface tension for coating on porous substrates without adhesive strike-through as often observed with prior emulsion adhesives;

c) emulsion viscosity required for coating may be obtained by controlling emulsion particle size during polymerization, and no viscosity modifier or thickener is required;

d) since the adhesive is an aqueous emulsion, hazardous solvents and potential environmental pollution during the coating process are eliminated;

e) cohesive strength and shear moduli of the present adhesives of the present invention are higher than comparable commercial emulsion-based pressure-sensitive adhesives.

The trade marks as used in the above are acknowledged as such.

## Claims

1. A pressure-sensitive adhesive, suitable for use on human skin, having:
a dynamic storage modulus of 1.0 to 2.0 $N/cm^2$;
a dynamic loss modulus of 0.6 to 0.9 $N/cm^2$;
a modulus ratio, tan $\delta$(=loss modulus/storage modulus), of from 0.4 to 0.6 as determined at an oscillation frequency sweep of 1 rad/sec at 25% strain rate at body temperature of 36°C,
and comprising a copolymer of either:
(a) 90—95% n-butylacrylate and 5—10% n-vinylcaprolactam; or
(b) 80—90% 2-ethylhexylacrylate and 10—20% n-vinylcaprolactam,
which copolymer was formed by emulsion polymerisation in water.

2. The adhesive of claim 1, wherein the copolymer further comprises 0.01 to 5.0% of carboxyl-or hydroxyl-containing comonomer.

3. The adhesive of claim 2, wherein the carboxyl-or hydroxyl-containing comonomer is acrylic acid, methacrylic acid, N-methylolacrylamide, N-(isobutoxyl)methacrylamide, N-(n-butoxyl)methacrylamide, 2-hydroxyethylacrylate, or 2-hydroxypropylacrylate.

4. The adhesive of claim 1, wherein the copolymer comprises 95 parts by weight n-butylacrylate, 5 parts by weight n-vinylcaprolactam and 0.05 parts by weight N-methylolacrylamide.

5. The adhesive of claim 1, wherein the copolymer comprises 95 parts by weight n-butylacrylate, 5 parts by weight n-vinylcaprolactam and 0.2 parts by weight methacrylic acid.

6. A pressure-sensitive adhesive sheet product for medical applications comprising a cloth, fabric, paper or plastic film backing material coated with an adhesive according to any one of claims 1 to 5.

## Patentansprüche

1. Zur Anwendung auf der menschlichen Haut geeigneter Haftklebstoff, mit:

— einem dynamischen Speichermodul von 1,0 bis 2,0 $N/cm^2$;
— einem dynamischen Verlustmodul von 0,6 bis 0,9 $N/cm^2$;
— einem Modul-Verhältnis, tan $\delta$(=Verlustmodul/Speichermodul), von 0,4 bis 0,6, bestimmt bei einem Schwingungsfrequenzbereich von 1 rad/sek bei 25%iger Belastung bei Körpertemperatur von 36°C,

und umfassend ein Copolymer aus entweder:
(a) 90—95% n-Butylacrylat und 5—10% n-Vinylcaprolactam; oder
(b) 80—90% 2-Ethylhexylacrylat und 10—20% n-Vinylcaprolactam,
welches Copolymer durch Emulsionspolymerisation in Wasser gebildet wurde.

2. Klebstoff nach Anspruch 1, worin das Copolymer zusätzlich 0,01 bis 5,0% Carboxyl- oder Hydroxyl-haltiges Comonomer umfaßt.

3. Klebstoff nach Anspruch 2, worin das Carboxyl-oder Hydroxyl-haltige Comonomer Acrylsäure, Methacrylsäure, N-Methylolacrylamid, N-(Isobutoxyl)-methacrylamid, N-(n-Butoxyl)methacrylamid, 2-Hydroxyethylacrylat oder 2-Hydroxypropylacrylat ist.

4. Klebstoff nach Anspruch 1, worin das Copolymer 95 Gewichtsteile n-Butylacrylat, 5 Gewichtsteile n-Vinylcaprolactam und 0,05 Gewichtsteile N-Methylolacrylamid umfaßt.

5. Klebstoff nach Anspruch 1, worin das Copolymer 95 Gewichtsteile n-Butylacrylat, 5 Gewichtsteile n-Vinylcaprolactam und 0,2 Gewichtsteile Methacrylsäure umfaßt.

8

**0 130 080**

6. Flächiges Haftklebeprodukt für medizinische Anwendungen, umfassend ein mit einem Klebstoff nach einem der Ansprüche 1 bis 5 beschichtetes Trägermaterial aus Tuch, Gewebe, Papier oder Kunststoffolie.

**Revendications**

1. Adhésif autocollant, utilisable sur la peau humaine, ayant:
un module de stockage dynamique de 1,0 à 2,0 N/cm$^2$;
un module de perte dynamique de 0,6 à 0,9 N/cm$^2$;
un rapport des modules, tg δ(=module de perte/module de stockage), de 0,4 à 0,6, déterminé pour une déviation de fréquence d'oscillation de 1 rad/s à un taux de déformation de 25%, à la température du corps de 36°C,
et comprenant un copolymère
(a) soit de 90—95% d'acrylate de n-butyle et de 5—10% de N-vinylcaprolactame; ou
(b) soit de 80—90% d'acrylate de 2-éthylhexyle et de 10—20% de N-vinylcaprolactame,
ce copolymère étant formé par polymérisation en émulsion dans l'eau.

2. Adhésif selon la revendication 1, dans lequel le copolymère comprend en outre 0,01 à 5,0% de comonomère carboxylé ou hydroxylé.

3. Adhésif selon la revendication 2, dans lequel le comonomère carboxylé ou hydroxylé est l'acide acrylique, l'acide méthacrylique, le N-méthylolacrylamide, le N-(isobutoxy)-méthacrylamide, le N-(n-butoxy)méthacrylamide, l'acrylate de 2-hydroxyéthyle ou l'acrylate de 2-hydroxypropyle.

4. Adhésif selon la revendication 1, dans lequel le copolymère comprend 95 parties en poids d'acrylate de n-butyle, 5 parties en poids de N-vinylcaprolactame et 0,05 parties en poids de N-méthylolacrylamide.

5. Adhésif selon la revendication 1, dans lequel le copolymère comprend 95 parties en poids d'acrylate de n-butyle, 5 parties en poids de N-vinylcaprolactame et 0,2 parties en poids d'acide méthacrylique.

6. Produit en feuille adhésive autocollante pour applications médicales comprenant une matière de support en tissu, étoffe, papier ou film de plastique enduite d'un adhésif selon l'une quelconque des revendications 1 à 5.